# EUROPÄISCHE PATENTSCHRIFT

(11) **EP 1 925 529 B1**
(45) Veröffentlichungstag und Bekanntmachung des Hinweises auf die Patenterteilung: **23.06.2010**
(21) Anmeldenummer: 06124563.5
(22) Anmeldetag: 22.11.2006
(51) Int. Cl.: B62D 5/04, B62D 15/02

(54) **Lenkwinkelerkennung über elektronisches Stabilitäts-Program und elektrische Servolenkung**
Steering angle recognition using electronic stability program and electric power steering
Reconnaissance d'angle de conduite par programme électronique de stabilité et direction assistée électrique

(43) Veröffentlichungstag der Anmeldung: 28.05.2008
(73) Patentinhaber: Ford Global Technologies, LLC, Dearborn, MI 48126 (US)
(72) Erfinder: Frese, Thomas, 50737, Köln (DE); Thoene, Alois, 50126, Bergheim (DE); Hestermeyer, Thorsten Wilhelm, 50737, Köln (DE)
(74) Vertreter: Drömer, Hans-Carsten

(56) Entgegenhaltungen:
- EP-A- 1 632 421
- US-A1- 2004 061 500

## Beschreibung

Die Erfindung betrifft ein Verfahren zum Erkennen einer Lenkradposition eines Kraftfahrzeuges, welches eine Auswerteeinheit und eine Hilfskraft unterstützte Lenkeinrichtung aufweist, der ein Positionssensor zugeordnet ist.

Das Bestimmen des Lenkwinkels hat heutzutage große Bedeutung im Bereich der Fahrdynamikregelung, wobei beispielsweise Lenkwinkelsensoren zum Einsatz kommen. Eine Stabilisierungseinrichtung kann zum Beispiel eine ESP-Einheit sein, wobei eine hilfskraftunterstützte Lenkeinrichtung z. B. eine EPAS (Electric Power Assisted Steering) sein kann. Aber auch im Bereich des sog. "Steer by wire", d.h. des elektronischen Übertragens von Lenksignalen an die gelenkten Räder, kommen Lenkwinkelsensoren zum Einsatz.

Die Lenkwinkelsensoren übermitteln in beiden Fällen typischerweise die Winkelstellung des Lenkrades, die in enger Verbindung mit der Stellung der gelenkten Räder und damit der Fahrtrichtung des Kraftfahrzeuges steht. Beispielsweise wird in einer ESP-Einheit neben anderen für die Fahrdynamik des Kraftfahrzeuges wichtigen Parametern der Lenkwinkel übermittelt, um die Fahrtrichtung, in die der Fahrer zu fahren beabsichtigt, zu ermitteln. Der Lenkwinkelsensor übersetzt dabei die Lenkbewegungen des Fahrers in elektrische Signale für die ESP-Einheit bzw. das ESP-System.

Eine bekannte Möglichkeit, einen Lenkwinkelsensor zu realisieren, ist der sog. absolute Lenkwinkelsensor. Ein absoluter Lenkwinkelsensor überträgt die absolute Winkelposition des Lenkrades bzw. des Lenkstocks eines Kraftfahrzeuges an eine Auswerteeinheit, z. B. an die ESP-Einheit. Beispielsweise wird mit Hilfe einer Codierscheibe die absolute Position des Lenkrades an die Auswerteeinheit, z.B. an die ESP-Einheit geleitet. Zusätzlich kann der Wert noch mit weiteren Eingangsignalen wie z. B. die Gierrate, Querbeschleunigung und/oder Radgeschwindigkeit plausibilisiert werden. Diese Möglichkeit ist jedoch sehr kostenintensiv.

Als kostengünstige, weitere Alternative finden heutzutage aber auch sog. relative Lenkwinkelsensoren Verwendung. Relative Lenkwinkelsensoren übertragen lediglich relative Lenkwinkeländerungen aus einer beliebigen Anfangsposition heraus, wenn das Lenkrad bzw. der Lenkstock gedreht wird. Aus den Lenkwinkeländerungen bzw. den relativen Lenkwinkelsignalen und zusätzlichen Informationen, die mittels weiterer Sensoren gewonnen werden, berechnet die Auswerteeinheit, also beispielsweise die ESP-Einheit die absolute Position des Lenkrades. Als zusätzliche Informationen können beispielsweise die Gierrate, Querbeschleunigung und/oder Radgeschwindigkeit aufgenommen werden. Dauer und Güte der Bestimmung der absoluten Lenkradposition ist aber abhängig von der Fahrweise, wobei alle Eingangsignale gegeneinander plausibilisiert werden müssen, was unter Umständen relativ lange dauern kann. Während dieser Zeit steht das ESP nur eingeschränkt zur Verfügung.

Die US2004/061500 A1 betrifft eine Methode zur Bestimmung des tatsächlichen Lenkradwinkels einer Fahrzeuglenkung. Die Lenkung weist einen anfänglichen Lenkwinkel auf, wenn das Fahrzeug in den Zündung-Ein-Status geht. Die Lenkung weist auch einen Mittelposition befindlichen Lenkwinkel auf, wenn Fahrzeug geradeaus fährt. Die Methode umfaßt die Feststellung eines halb-relativen Lenkwinkelversatzes; dessen Speicherung, wenn das Fahrzeug in den Zündung-Aus-Zustand gebracht wird; die Messung eines relativen Lenkwinkels von einem halb-relativen Lenkwinkelsensor während des Zündung-Aus-Zustands; Abrufen des halb-relativen Lenkwinkelversatzes aus dem Speicher, wenn das Fahrzeug in den Zündung-Ein-Zustand gebracht wird; die Fortführung der Messung des relativen Lenkwinkels vom halb-relativen Lenkwinkelsensor, während des Zündung-Ein-Zustands; und Feststellen des Lenkwinkels auf der Basis des relativen Lenkwinkels und des halb-relativen Lenkwinkelversatzes. Damit sollen die Lenkwinkelinformationen während der Abschaltung der Zündung behalten werden, wobei ein relativer Lenkwinkelsensor verwendet wird. Dementsprechend ist die Stabilitätskontrolle während der Berechnungszeit vorübergehend deaktiviert, kann aber wohl zu einem früheren Zeitpunkt nach der Zündung aktiviert werden. Wenn die Stromzufuhr zum halb-relativen Lenkwinkelsensor allerdings aus einem beliebigen Grund unterbrochen ist, werden alle Daten eines Kalibrierungsmoduls zurückgesetzt, so daß eine elektronische Steuereinheit den anfänglichen Versatz neu berechnen muß.

Die EP 1 632 421 A2 offenbart ein Lenksystem, insbesondere eine Servolenkung für ein Fahrzeug. Ein Getriebe formt eine Rotationsbewegung eines ersten Getriebeelementes in eine axiale Verschiebebewegung einer Stange zur Lenkwinkelverstellung eines Rades um. Die Verschiebebewegung der Stange erfolgt zwischen einem ersten und einem zweiten Anschlag. Das Lenksystem weist einen Positionssensor zur Erfassung der Position der Stange und eine Steuer- und Regelungseinrichtung auf. Der Stange oder ein mit ihr verschiebbares Bauteil des Lenksystems ist in der Nähe ihres ersten und zweiten Anschlages eine erste bzw. eine zweite Referenzinformation zur Erfassung der Position der Stange durch den Positionssensor eingeprägt. Durch die Steuer- und Regelungseinrichtung werden die Signale des Positionssensors mit den Signalen eines Drehwinkelsensors für das erste Getriebeelement oder für einen Servomotor des Lenksystems verknüpft.

Der Erfindung liegt die Aufgabe zugrunde, ein Verfahren der Eingangs genannten Art mit einfachen Mitteln dahingehend zu verbessern, daß auf kostenintensive relative und absolute Lenkwinkelsensoren verzichtet werden kann, wobei gleichzeitig Fehlerzustände sicher erkannt werden können.

Erfindungsgemäß wird die Aufgabe durch ein Verfahren mit den Merkmalen des Anspruchs 1 gelöst.

Die Auswerteeinheit ist vorzugsweise eine ESP-Einheit, wobei als hilfskraftunterstützte Lenkeinrichtung eine EPAS bevorzugt wird.

Der Erfindung liegt die Erkenntnis zugrunde, daß der EPAS Motor-Positionssensor bzw. der Positionssensor bei Fahrzeugen mit EPAS-Systemen als Sensor für eine relative Lenkwinkeländerung genutzt werden kann und die Bestimmung des absoluten Wertes im EPAS durchgeführt werden kann. Dabei wird die Lenkradbewegung auch bei ausgeschalteter Zündung überwacht, so daß ein absolutes Signal in der Regel bei Einschalten des Fahrzeugs vorliegt. Der Nachteil dieser Variante liegt darin, daß die Bestimmung der Absolutposition nicht mit bewährten ESP-Algorithmen durchgeführt wird, sondern mit neu entwickelten Algorithmen, denen nur reduzierte Sensorinformationen zur Verfügung stehen und die für die Bestimmung des absoluten Lenkwinkels deutlich länger brauchen als die bewährten ESP-Algorithmen. Auch die Plausibilisierung, die nach Einschalten des Fahrzeugs notwendig wird, erfolgt mit diesen neuen Algorithmen und ist daher langsamer und weniger genau.

Nach Verlust einer Bordspannung bzw. einer Batteriespannung, also beispielsweise bei Inbetriebnahme des Fahrzeugs, Service Arbeiten mit Abklemmen der Batterie oder Batterietausch, ist vorteilhaft vorgesehen, daß das EPAS einen in einem bestimmten Kreissegment (z.B. 30°) absoluten Lenkwinkel-Wert an das ESP sendet. Das ESP bestimmt mit Hilfe von Algorithmen und weiteren, für die normalen ESP-Funktionen ohnehin genutzten Sensorwerten, wie z. B. Radgeschwindigkeiten, Gierrate und Querbeschleunigung, in welchem Kreissegment sich das Lenkrad befindet. Diesen absoluten Lenkwinkelwert sendet das ESP an das EPAS zurück, welches diesen Wert übernimmt und an weitere Module verteilt.

Bei "Zündung-aus" überwacht das EPAS weiterhin alle Bewegungen des Lenkrads und schreibt damit den absoluten Lenkwinkel fort. Nach "Zündung an" bzw. Einschalten des Kraftfahrzeugs übermittelt das EPAS einen absoluten Lenkwinkel-Wert an das ESP. Das ESP plausibilisiert diesen Wert mit Hilfe von bewährten Algorithmen und den bereits genannten Signalen auf die Genauigkeit des Kreissegments. Nach erfolgreicher Plausibilisierung sendet das ESP das Ergebnis an das EPAS zurück und dieses übernimmt diesen Wert und verteilt ihn an weitere Module.

Die ESP-Einheit und die EPAS sind vorteilhaft miteinander vernetzt bzw. kommunizieren miteinander. In der ESP-Einheit ist ein Algorithmus, also die sog. Technologie des "on-center find" integriert. Mittels der Lenkwinkelbeobachtung bzw. der Überwachung von Lenkbewegungen während des Zustands "Zündung aus" im EPAS und der Vernetzung mit der ESP-Einheit wird ein plausibilisierter, robuster absoluter Lenkwinkel hoher Präzision generiert, so daß auf absolute und relative Lenkwinkelsensoren verzichtet werden kann, wobei die Plausibilisierung schneller und genauer erfolgt.

Günstig im Sinne der Erfindung ist, wenn die mittels des EPAS überwachte Lenkradposition als Signal bei dem Einschalten des Kraftfahrzeugs, also sofort im Zustand "Zündung an" als absolutes Signal mit einem überlagerten Qualitätsfaktor an die Auswerteeinheit bzw. an die ESP-Einheit geleitet wird. Hierdurch ist eine Plausibilisierung innerhalb des ESP erheblich schneller und sicherer möglich als im bekannten Stand der Technik, so daß die ESP-Funktion früher als bei den bisher realisierten Methoden zur Verfügung steht. Gleichzeitig wird das Absolutsignal erst nach erfolgreicher Plausibilisierung verwendet, was das Gesamtsystem ebenfalls sicherer als im Vergleich zum Stand der Technik macht. Somit ist das von der EPAS an die ESP-Einheit geleitete Signal von der ESP-Einheit zunächst als Signal unter Evaluierungserfordernis erkennbar.

Der ESP-Einheit können die für die ESP-Funktion verwendbaren, weiteren Signale wie z.B. Gierrate, Querbeschleunigung und/oder Radgeschwindigkeit zugeleitet werden, welche von geeigneten Vorrichtungen bzw. geeigneten Sensoren aufgenommen werden. Zweckmäßig im Sinn der Erfindung ist daher vorgesehen, dass die Auswerteeinheit bzw. die ESP-Einheit das ihr zugeleitete Signal "unter Evaluierungserfordernis" bevorzugt unter Einbeziehung dieser Signale plausibilisiert.

Günstiger Weise empfängt die EPAS wiederum ein Plausibilisierungsbit bzw. -signal und die von der ESP-Einheit beobachtete absolute Lenkradposition von der Auswerteeinheit bzw. der ESP-Einheit, so daß die EPAS die absolute Lenkradposition bzw. das Lenkradpositionssignal an das von der ESP-Einheit erhaltene Signal adaptieren kann und an andere Empfänger bzw. Module leiten kann.

Bei erfolgreicher Adaption in der EPAS wechselt der Qualitätsfaktor von "unter Evaluierung" auf "in Ordnung" (iO). Konnte eine Plausibilisierung im ESP nicht vorgenommen werden, bzw. war diese negativ, wechselt der Qualitätsfaktor der EPAS von "unter Evaluierung" auf "nicht in Ordnung" (niO). In diesem Fall liegt ein Fehler vor. Die ESP-Einheit wird außer betrieb gesetzt, was dem Fahrzeugführer mit geeigneten Mitteln, beispielsweise einer Warnlampe angezeigt wird. Der Fehler kann dann schnellstens in einer Fachwerkstatt ausgelesen bzw. behoben werden.

Vorteilhafter Weise kann mit der bevorzugten Vernetzung von EPAS mit der ESP-Einheit eine Plausibilisierung durch die direkt an der ESP-Einheit anstehenden Signale wie z. B. Gierrate, Querbeschleunigung und/oder Radgeschwindigkeit erreicht werden. Der Signalaustausch zwischen EPAS und der ESP-Einheit kann bevorzugt über einen CAN-Bus erfolgen.

Da die ESP-Einheit der Empfänger der weiteren Signale (Gierrate, Querbeschleunigung und/oder Radgeschwindigkeit) ist, ist die Berechnung bzw. Generierung und Plausibilisierung in der ESP-Einheit robuster und sicherer, wobei die Systemverfügbarkeit erhöht ist. Die Zuverlässigkeit und die Verfügbarkeit der ESP-Einheit nach dem Zustand "Zündung an" wird dadurch erheblich verbessert. Die Fehlererkennungsmöglichkeit ist durch die erhöhte Redundanz erheblich verbessert. Des Weiteren werden mittels des vorteilhaften Verfahrens die Kosten erheblich gesenkt, da kein absoluter oder relativer Lenkwinkelsensor mehr benötigt wird. Vielmehr werden vorteilhaft systembedingt, ohnehin vorhandene Sensoren sowie bewährte Plausibilisierungsalgorithmen eingesetzt, wie der inhärente Motorpositionssensor im EPAS, sowie der Gierraten-, Querbeschleunigungs- und/oder Radgeschwindigkeitssensor in der ESP-Einheit.

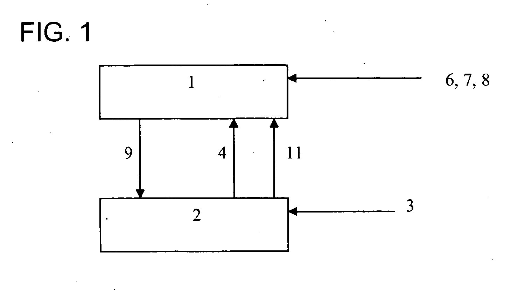

Weitere vorteilhafte Ausgestaltungen sind in den Unteransprüchen und der folgenden Figurenbeschreibung offenbart. Es zeigt die einzige
- Fig. 1: das erfindungsgemäße Verfahren als Prinzipskizze.

Figur 1 zeigt ein Verfahren zur Erkennung einer Lenkradposition eines Kraftfahrzeuges, welches eine Auswerteeinheit 1 und eine hilfskraftunterstützte Lenkeinrichtung 2 aufweist. Die Auswerteeinheit 1 und die hilfskraftunterstützte Lenkeinrichtung 2 sind als Blöcke dargestellt, die z.B. über einen nicht dargestellten CAN-Bus miteinander vernetzt sind, so daß beide miteinander kommunizieren können. Die hilfskraftunterstützte Lenkeinrichtung 2 ist als EPAS ausgeführt, der ein Motorpositionssensor zugeordnet ist. Die Auswerteeinheit 1 ist beispielsweise als ESP-Einheit ausgeführt.

Bei der ersten Inbetriebnahme (Zündung an) nach Verlust der Batteriespannung wird im EPAS eine Lenkradposition 3 des Kraftfahrzeugs gemessen, z.B. als absoluter Winkel in einem Kreissegment. Bei Inbetriebnahme (Zündung an) ohne vorherigen Verlust der Batteriespannung hat die EPAS während der "Zündung aus"-Phase den absoluten Lenkradpositionswert überwacht und fortgeschrieben.

Der aktuelle Wert, also die von der EPAS überwachte bzw. gemessene Lenkradposition wird bei "Zündung an" mit einem Qualitätsfaktor überlagert als Lenkradpositionssignal an die ESP-Einheit geleitet. Aufgrund der Überlagerung mit dem Qualitätsfaktor wird das Lenkradpositionssignal von der ESP-Einheit als Signal unter Evaluierung erkannt. Dieser Schritt ist in Figur 1 mit dem Pfeil 4 von der EPAS zur ESP-Einheit orientiert dargestellt.

Der ESP-Einheit werden zudem Signale bezüglich Fahrzuständen wie beispielsweise Gierrate 6, Radgeschwindigkeit 7 und Querbeschleunigung 8 zugeleitet. Mit diesen Signalen 6, 7, 8 plausibilisiert die ESP-Einheit die Lenkradposition bzw. das von der EPAS erhaltene Signal "unter Evaluierung".

Das von der ESP-Einheit plausibilisierte Signal wird der EPAS zugeleitet, was mittels des Pfeils 9 von der ESP-Einheit zur EPAS orientiert dargestellt ist. Das EPAS adaptiert die absolute Lenkradposition (weiter fortgeschrieben im Zustand "Zündung aus") an das bzw. an die von der ESP-Einheit erhaltenen Signale.

Nach erfolgter Adaption wechselt der Qualitätsfaktor von "unter Evaluierung" auf in Ordnung (iO). Dieses Signal wird an die ESP-Einheit geleitet (Pfeil 11). Es liegt kein Fehler vor. Ist die Plausibilisierung im ESP nicht erfolgreich, wechselt der vom EPAS gesendete Qualitätsfaktor auf nicht in Ordnung (niO).

## Patentansprüche

1. Verfahren zur Erkennung einer Lenkradposition eines Kraftfahrzeuges, welches eine Auswerteeinheit (1) und eine hilfskraftunterstützte Lenkeinrichtung (2) aufweist, wobei der hilfskraftunterstützten Lenkeinrichtung (2) ein Positionssensor zugeordnet ist,
**dadurch gekennzeichnet, daß**
die hilfskraftunterstützte Lenkeinrichtung (2) nach Verlust einer Bordspannung einen zumindest in einem Kreissegment absoluten Lenkwinkelbetrag an die Auswerteeinheit (1) leitet, wobei die Auswerteeinheit (1) hieraus eine absolute Lenkwinkelposition detektiert, die an die hilfskraftunterstützte Lenkeinrichtung (2) übertragen wird, welche den von der Auswerteeinheit (1) erhaltenen absoluten Wert übernimmt, wobei die hilfskraftunterstützte Lenkeinrichtung (2) den absoluten Lenkwinkel auch bei ausgeschalteter Zündung weiter überwacht, und im eingeschalteten Zustand des Kraftfahrzeugs den aktuellen Wert an die Auswerteeinheit (1) leitet, so daß die Auswerteeinheit (1) den von der hilfskraftunterstützten Lenkeinrichtung (2) erhaltenen Wert plausibilisiert und an die hilfskraftunterstützte Lenkeinrichtung (2) zurückleitet, welche den erhaltenen Wert übernimmt, wobei die von der hilfskraftunterstützten Lenkeinrichtung (2) überwachte Lenkradposition bzw. ein Lenkradpositionssignal mit einem Qualitätsfaktor überlagert an die Auswerteeinheit (1) geleitet wird.

2. Verfahren nach Anspruch 1,
**dadurch gekennzeichnet, daß**
die Auswerteeinheit (1) mit der hilfskraftunterstützten Lenkeinrichtung (2) vernetzt ist.

3. Verfahren nach Anspruch 1 oder 2,
**dadurch gekennzeichnet, daß**
die Auswerteeinheit (1) das ihr zugeleitete Signal mit Fahrzustandssignalen (6, 7, 8) plausibilisiert.

4. Verfahren nach einem der vorhergehenden Ansprüche,
**dadurch gekennzeichnet, daß**
die Auswerteeinheit (1) zumindest ein Plausibilisierungssignal an die hilfskraftunterstützte Lenkeinrichtung (2) leitet.

5. Verfahren nach einem der vorhergehenden Ansprüche,
**dadurch gekennzeichnet, daß**
die hilfskraftunterstützte Lenkeinrichtung (2) das von ihr überwachte Lenkradpositionssignal an einem ihr von der Auswerteeinheit (1) zugeleiteten Plausibilisierungssignal adaptiert.

## Claims

1. Method for detecting a steering wheel position of a motor vehicle which has an evaluation unit (1) and a servo-assisted steering device (2), a position sensor being assigned to the servo-assisted steering device (2), **characterized in that**, after loss of an on-board power system voltage, the servo-assisted steering device (2) conducts a steering angle value which is absolute at least in one circular segment to the evaluation unit (1), the evaluation unit (1) detecting therefrom an absolute steering angle position which is transmitted to the servo-assisted steering device (2) which accepts the absolute value obtained from the evaluation unit (1), the servo-assisted steering device (2) continuing to monitor the absolute steering angle even when the ignition is switched off and conducting the current value to the evaluation unit (1) in the switched-on state of the motor vehicle so that the evaluation unit (1) checks the plausibility of the value obtained from the servo-assisted steering device (2) and conducts it back to the servo-assisted steering device (2) which accepts the obtained value, the steering wheel position which is monitored by the servo-assisted steering device (2) or a steering wheel position signal with a quality factor superimposed on it being conducted to the evaluation unit (1).

2. Method according to Claim 1, **characterized in that** the evaluation unit (1) is networked to the servo-assisted steering device (2).

3. Method according to Claim 1 or 2, **characterized in that** the evaluation unit (1) checks the plausibility of the signal conducted to it with driving state signals (6, 7, 8).

4. Method according to one of the preceding claims, **characterized in that** the evaluation unit (1) conducts at least one plausibility signal to the servo-assisted steering device (2).

5. Method according to one of the preceding claims, **characterized in that** the servo-assisted steering device (2) adapts the steering wheel position signal monitored by it to a plausibility checking signal which is conducted to it by the evaluation unit (1).

## Revendications

1. Procédé de reconnaissance d'une position des roues directrices d'un véhicule automobile, qui présente une unité d'analyse (1) et un mécanisme de direction (2) à assistance hydraulique, le mécanisme de direction (2) à assistance hydraulique étant associé à un capteur de position,
**caractérisé en ce que**
le mécanisme de direction (2) à assistance hydraulique, après la perte d'une tension de bord, transmet une valeur d'angle de direction absolue au moins dans un segment de cercle à l'unité d'analyse (1), l'unité d'analyse (1) en déduisant une position d'angle de direction absolue, qui est transmise au mécanisme de direction (2) à assistance hydraulique qui reprend la valeur absolue obtenue par l'unité d'analyse (1), le mécanisme de direction (2) à assistance hydraulique continuant de surveiller l'angle de direction absolue même après la coupure de l'allumage, et dans l'état démarré du véhicule automobile, transmettant la valeur actuelle à l'unité d'analyse (1), de sorte que l'unité d'analyse (1) effectue une analyse de plausibilité de la valeur obtenue par le mécanisme de direction (2) à assistance hydraulique et la retransmet au mécanisme de direction (2) à assistance hydraulique, qui reprend la valeur obtenue, la position des roues directrices ou un signal de position des roues directrices surveillé par le mécanisme de direction (2) à assistance hydraulique étant transmis(e) à l'unité d'analyse (1) avec un facteur de qualité ajouté.

2. Procédé selon la revendication 1,
**caractérisé en ce que**
l'unité d'analyse (1) est reliée en réseau au mécanisme de direction (2) à assistance hydraulique.

3. Procédé selon la revendication 1 ou 2,
**caractérisé en ce que**
l'unité d'analyse (1) effectue une analyse de plausibilité du signal qui lui a été transmis avec des signaux d'état de conduite (6, 7, 8).

4. Procédé selon l'une quelconque des revendications précédentes,
**caractérisé en ce que**
l'unité d'analyse (1) transmet au moins un signal de plausibilité au mécanisme de direction (2) à assistance hydraulique.

5. Procédé selon l'une quelconque des revendications précédentes,
**caractérisé en ce que**
le mécanisme de direction (2) à assistance hydraulique adapte le signal de position des roues directrices qu'il surveille à un signal de plausibilité qui lui a été transmis par l'unité d'analyse (1).
